# EUROPEAN PATENT APPLICATION

(11) **EP 4 615 040 A1**
(43) Date of publication of application: **10.09.2025**
(21) Application number: 22963960.4
(22) Date of filing: 03.11.2022
(51) Int. Cl.: H04W 24/10

(54) **MEASUREMENT REPORT PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/129648
(87) International publication number: WO 2024/092650

(57) **Abstract**

The embodiments of the present disclosure provide a measurement report processing method and apparatus, a communication device, and a storage medium; the measurement report processing method is executed by a first node, and comprises: sending first information to a UE, wherein the first information is used for indicating the reporting of an RVQoE report when the UE is in multi-connection.

## Description

### TECHNICAL FIELD

The disclosure relates to, but is not limited to, the field of wireless communication technologies, more particularly, to a measurement report processing method, a measurement report processing, a communication device and a storage medium.

### BACKGROUND

Quality of experience (QoE) refers to a service quality experience of a user equipment (UE). In related arts, the QoE may be reflected by some application layer parameters. QoE measurement collection (QMC) is a means for an operator to collect, through network configuration, QoE parameters of specific services (such as video and/or voice services) from a UE application layer. The operator can obtain, through the QMC, service experiences of UEs in a network, locate problems and UEs with poor experiences, and/or optimize the UE experiences.

Information such as a radio access network (RAN) visible QoE (RVQoE) report for an RVQoE measurement may be configured for network optimization. The RVQoE report can also be collected for the network optimization in a scenario where the UE needs to support multi-connection (such as dual connectivity, DC). However, in the multi-connection, connected master and secondary nodes are unable to know whether they have read the RVQoE report, thus making it impossible to realize resource optimization of the master and secondary nodes themselves.

### SUMMARY

The embodiments of the disclosure provide a measurement report processing method, a measurement report processing apparatus, a communication device and a storage medium.

According to a first aspect of embodiments of the disclosure, a measurement report processing method, performed by a first node, is provided. The method includes:
sending first information to a UE, in which the first information is configured to indicate the UE to report, in a case where the UE is in multi-connection, a radio access network (RAN) visible quality of experience (QoE) (RVQoE) report.

In some embodiments, the first information includes at least one of:
RVQoE report configuration information, configured to indicate a network node to which the UE reports the RVQoE report;
first indication information, configured to indicate the UE to report a data radio bearer (DRB) identity (ID) of at least one DRB corresponding to the RVQoE report; or
second indication information, configured to indicate the UE to report first bearer-related information corresponding to the RVQoE report.

In some embodiments, the first bearer-related information includes at least one of:
at least one protocol data unit (PDU) session ID;
at least one quality of service (QoS) flow ID (QFI); or
at least one DRB ID.

In some embodiments, the second indication information is configured to indicate the UE to report, upon occurrence of a specific event, the first bearer-related information, and the specific event comprises at least one of:
an application layer session start event; or
an event where a bearer corresponding to an application layer measurement changes.

In some embodiments, the method includes: receiving second information sent by a second node, in which the second information is configured to indicate reporting of second bearer-related information corresponding to the RVQoE report.

In some embodiments, the second bearer-related information includes at least one of:
a DRB ID corresponding to an RVQoE measurement;
the first bearer-related information; or
bearer mapping information, in which the bearer mapping information is configured to indicate a mapping relationship between a DRB ID and a PDU session ID and/or a QFI.

In some embodiments, the method includes: determining the RVQoE report configuration information according to the second information.

In some embodiments, the method includes at least one of:
receiving third information sent by the UE, in which the third information is determined by the UE based on the first bearer-related information; or
receiving third information sent by the UE, in which the third information is sent by the UE according to a protocol agreement.

In some embodiments, the method includes: determining the RVQoE report configuration information according to the third information.

In some embodiments, the third information is sent via being comprised in a message configured to send a status indication of an application layer whose session starts, and/or the third information is sent in a case where a bearer corresponding to an application layer measurement changes.

In some embodiments, the method includes:
receiving fourth information sent by the UE, in which the fourth information includes the RVQoE report; the method further includes:
determining, according to the fourth information, whether to send the RVQoE report to a second node; and/or
determining, according to the fourth information, whether to read the RVQoE report.

In some embodiments, determining, according to the fourth information, whether to send the RVQoE report to the second node, includes:
determining, according to the fourth information and second bearer-related information, whether to send the RVQoE report to the second node.

In some embodiments, the fourth information includes: third indication information, and the third indication information is configured to indicate whether to send the RVQoE report to the second node; and
determining, according to the fourth information, whether to send the RVQoE report to the second node, includes:
determining, according to the third indication information, whether to send the RVQoE report to the second node.

In some embodiments, the fourth information further includes third bearer-related information corresponding to the RVQoE report, and the third bearer-related information is configured for the first node or the second node to perform a resource optimization operation.

In some embodiments, the third bearer-related information includes at least one of:
at least one DRB ID;
at least one list ID, in which one list ID includes at least one DRB ID;
first timestamp information corresponding to the DRB ID; or
second timestamp information corresponding to the list ID.

In some embodiments, the method includes:
determining, according to second bearer-related information, whether to send the RVQoE report to a second node.

In some embodiments, the first node is a master node (MN), and the second node is a secondary node (SN); or
the first node is an SN, and the second node is an MN.

According to a second aspect of embodiments of the disclosure, a measurement report processing method, performed by a UE, is provided. The method includes:
receiving first information sent by a first node, in which the first information is configured to indicate the UE to report, in a case where the UE is in multi-connection, an RVQoE report.

In some embodiments, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

In some embodiments, the first bearer-related information includes at least one of:
at least one PDU session ID;
at least one QFI; or
at least one DRB ID.

In some embodiments, the second indication information is configured to indicate the UE to report, upon occurrence of a specific event, the first bearer-related information, and the specific event comprises at least one of:
an application layer session start event; or
an event where a bearer corresponding to an application layer measurement changes.

In some embodiments, the method includes:
determining third information based on the first bearer-related information; and
sending the third information to the first node, in which the third information is configured for the first node to determine the RVQoE report configuration information.

In some embodiments, the method includes:
sending fourth information to the first node, in which the fourth information includes the RVQoE report, and the fourth information is configured for the first node to determine whether to read the RVQoE report and/or whether to send the RVQoE report to a second node.

In some embodiments, the fourth information and second bearer-related information are configured for the first node to determine whether to send the RVQoE report to the second node.

In some embodiments, the fourth information includes third indication information, and the third indication information is configured to indicate whether the first node sends the RVQoE report to the second node.

In some embodiments, the fourth information further includes third bearer-related information corresponding to the RVQoE report, and the third bearer-related information is configured for the first node or the second node to perform a resource optimization operation.

In some embodiments, the third bearer-related information includes at least one of:
at least one DRB ID;
at least one list ID, in which one list ID includes at least one DRB ID;
first timestamp information corresponding to the DRB ID; or
second timestamp information corresponding to the list ID.

In some embodiments, each of the first time stamp information and the second time stamp information includes at least one of:
a starting time of usage;
an end time of usage; or
a duration of usage.

In some embodiments, the third bearer-related information further includes bearer information,
and the method includes:
adding the bearer information to the fourth information based on an access stratum (AS) of the UE;
   and/or
obtaining the bearer information from an AS of the UE based on an application layer of the UE, and adding the bearer information to the fourth information based on the application layer of the UE.

In some embodiments, the first node is an MN, and the second node is an SN; or
the first node is an SN, and the second node is an MN.

According to a third aspect of embodiments of the disclosure, a measurement report processing method, performed by a second node, is provided. The method includes:
receiving an RVQoE report sent by a first node, in which the RVQoE report is sent by the first node in a case of determining that the RVQoE report needs to be sent to the second node.

In some embodiments, the RVQoE report is sent by a UE in a case of receiving first information sent by the first node, and the first information is configured to indicate the UE to report, in a case where the UE is in multi-connection, the RVQoE report.

In some embodiments, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

In some embodiments, the method includes:
sending second information to the first node, in which the second information is configured to indicate reporting of second bearer-related information corresponding to the RVQoE report, and the second information is configured for the first node to determine the RVQoE report configuration information.

In some embodiments, the second bearer-related information includes at least one of:
a DRB ID corresponding to an RVQoE measurement;
the first bearer-related information; or
bearer mapping information, in which the bearer mapping information is configured to indicate a mapping relationship between a DRB ID and a PDU session ID and/or a QFI.

In some embodiments, the first node is an MN, and the second node is an SN; or
the first node is an SN, and the second node is an MN.

According to a fourth aspect of embodiments of the disclosure, a measurement report processing apparatus is provided. The apparatus includes:
a first sending module, configured to send first information to a UE, in which the first information is configured to indicate the UE to report, in a case where the UE is in multi-connection, an RVQoE report.

In some embodiments, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

In some embodiments, the first bearer-related information includes at least one of:
at least one PDU session ID;
at least one QFI; or
at least one DRB ID.

In some embodiments, the second indication information is configured to indicate the UE to report, upon occurrence of a specific event, the first bearer-related information, and the specific event comprises at least one of:
an application layer session start event; or
an event where a bearer corresponding to an application layer measurement changes.

In some embodiments, the apparatus includes: a first receiving module, configured to receive second information sent by a second node, in which the second information is configured to indicate reporting of second bearer-related information corresponding to the RVQoE report.

In some embodiments, the second bearer-related information includes at least one of:
a DRB ID corresponding to an RVQoE measurement;
the first bearer-related information; or
bearer mapping information, in which the bearer mapping information is configured to indicate a mapping relationship between a DRB ID and a PDU session ID and/or a QFI.

In some embodiments, the apparatus includes: a first processing module, configured to determine the RVQoE report configuration information according to the second information.

In some embodiments, the first receiving module is configured to: receive third information sent by the UE, in which the third information is determined by the UE based on the first bearer-related information;
or the first receiving module is configured to receive third information sent by the UE, in which the third information is sent by the UE according to a protocol agreement.

In some embodiments, the first processing module is further configured to: determine the RVQoE report configuration information according to the third information.

In some embodiments, the third information is sent via being comprised in a message configured to send a status indication of an application layer whose session starts, and/or the third information is sent in a case where a bearer corresponding to an application layer measurement changes.

In some embodiments, the first receiving module is configured to: receive fourth information sent by the UE, in which the fourth information includes the RVQoE report.

The first processing module is configured to determine, according to the fourth information, whether to send the RVQoE report to a second node; and/or
the first processing module is configured to determine, according to the fourth information, whether to read the RVQoE report.

In some embodiments, the first processing module is further configured to: determine, according to the fourth information and second bearer-related information, whether to send the RVQoE report to the second node.

In some embodiments, the fourth information includes: third indication information, and the third indication information is configured to indicate whether to send the RVQoE report to the second node.

The first processing module is configured to: determine, according to the third indication information, whether to send the RVQoE report to the second node

In some embodiments, the fourth information further includes third bearer-related information corresponding to the RVQoE report, and the third bearer-related information is configured for the first node or the second node to perform a resource optimization operation.

In some embodiments, the third bearer-related information includes at least one of:
at least one DRB ID;
at least one list ID, in which one list ID includes at least one DRB ID;
first timestamp information corresponding to the DRB ID; or
second timestamp information corresponding to the list ID.

In some embodiments, the first processing module is configured to: determine, according to second bearer-related information, whether to send the RVQoE report to a second node.

In some embodiments, the first node is an MN, and the second node is an SN; or
the first node is an SN, and the second node is an MN.

According to a fifth aspect of embodiments of the disclosure, a measurement report processing apparatus is provided. The apparatus includes:
a second receiving module, configured to receive first information sent by a first node, in which the first information is configured to indicate the UE to report, in a case where the UE is in multi-connection, an RVQoE report.

In some embodiments, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

In some embodiments, the first bearer-related information includes at least one of:
at least one PDU session ID;
at least one QFI; or
at least one DRB ID.

In some embodiments, the second indication information is configured to indicate the UE to report, upon occurrence of a specific event, the first bearer-related information, and the specific event comprises at least one of:
an application layer session start event; or
an event where a bearer corresponding to an application layer measurement changes.

In some embodiments, the apparatus includes:
a second processing module, configured to determine third information based on the first bearer-related information; and
a second sending module, configured to send the third information to the first node, in which the third information is configured for the first node to determine the RVQoE report configuration information.

In some embodiments, the second sending module is further configured to: send fourth information to the first node, in which the fourth information includes the RVQoE report, and the fourth information is configured for the first node to determine whether to read the RVQoE report and/or whether to send the RVQoE report to a second node.

In some embodiments, the fourth information and second bearer-related information are configured for the first node to determine whether to send the RVQoE report to the second node.

In some embodiments, the fourth information includes third indication information, and the third indication information is configured to indicate whether the first node sends the RVQoE report to the second node.

In some embodiments, the fourth information further includes third bearer-related information corresponding to the RVQoE report, and the third bearer-related information is configured for the first node or the second node to perform a resource optimization operation.

In some embodiments, the third bearer-related information includes at least one of:
at least one DRB ID;
at least one list ID, in which one list ID includes at least one DRB ID;
first timestamp information corresponding to the DRB ID; or
second timestamp information corresponding to the list ID.

In some embodiments, the third bearer-related information further includes bearer information.

The second processing module is configured to add the bearer information to the fourth information based on an AS of the UE;
and/or
the second processing module is configured to obtain the bearer information from the AS of the UE based on an application layer of the UE, and add the bearer information to the fourth information based on the application layer of the UE.

In some embodiments, the first node is an MN, and the second node is an SN; or
the first node is an SN, and the second node is an MN.

According to a sixth aspect of embodiments of the disclosure, a measurement report processing apparatus is provided. The apparatus includes:
a third receiving module, configured to receive an RVQoE report sent by a first node, in which the RVQoE report is sent by the first node in a case of determining that the RVQoE report needs to be sent to the second node.

In some embodiments, the RVQoE report is sent by a U in a case of receiving first information sent by the first node, and the first information is configured to indicate the UE to report, in a case where the UE is in multi-connection, the RVQoE report.

In some embodiments, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

In some embodiments, the apparatus includes: a third sending module, configured to send second information to the first node, in which the second information is configured to indicate reporting of second bearer-related information corresponding to the RVQoE report, and the second information is configured for the first node to determine the RVQoE report configuration information.

In some embodiments, the second bearer-related information includes at least one of:
a DRB ID corresponding to an RVQoE measurement;
the first bearer-related information; or
bearer mapping information, in which the bearer mapping information is configured to indicate a mapping relationship between a DRB ID and a PDU session ID and/or a QFI.

In some embodiments, the first node is an MN master node, and the second node is an SN; or
the first node is an SN, and the second node is an MN.

According to a seventh aspect of the disclosure, a communication device is provided. The communication device includes:
a processor; and
a memory for storing instructions executable by the processor;
in which the processor is configured to perform, when executing the executable instructions, the measurement report processing method of any embodiment of the disclosure.

According to an eighth aspect of the disclosure, a computer storage medium is provided. The computer storage medium stores a computer executable program, and when the computer executable program is executed by a processor, the measurement report processing method of any embodiment of the disclosure is implemented.

The technical schemes provided by the embodiments of the disclosure include the following beneficial effects.

In the embodiments of the disclosure, the first information is sent to the UE, in which the first information is configured to indicate the UE to report, in a case where the UE is in multi-connection, an RVQoE report. In this way, the UE may report the RVQoE report accurately (e.g., to a corresponding network node) when the UE is in multi-connection, which is beneficial to resource optimization of network node(s) (such as the first node and/or the second node).

It should be understood that both the foregoing general description and the following detailed description are exemplary and explanatory only, and they do not limit the embodiments of the disclosure.

### BRIEF DESCRIPTION OF THE DRAWINGS

FIG. 1 is a structural diagram of a wireless communication system according to an exemplary embodiment.
FIG. 2 is a schematic diagram of a wireless protocol architecture according to an exemplary embodiment.
FIG. 3 is a schematic diagram of another wireless protocol architecture according to an exemplary embodiment.
FIG. 4 is a schematic diagram of a measurement report processing method according to an exemplary embodiment.
FIG. 5 is a schematic diagram of a measurement report processing method according to an exemplary embodiment.
FIG. 6 is a schematic diagram of a measurement report processing method according to an exemplary embodiment.
FIG. 7 is a schematic diagram of a measurement report processing method according to an exemplary embodiment.
FIG. 8 is a schematic diagram of a measurement report processing method according to an exemplary embodiment.
FIG. 9 is a schematic diagram of a measurement report processing method according to an exemplary embodiment.
FIG. 10 is a schematic diagram of a measurement report processing method according to an exemplary embodiment.
FIG. 11 is a schematic diagram of a measurement report processing apparatus according to an exemplary embodiment.
FIG. 12 is a schematic diagram of a measurement report processing apparatus according to an exemplary embodiment.
FIG. 13 is a schematic diagram of a measurement report processing apparatus according to an exemplary embodiment.
FIG. 14 is a block diagram of a user equipment (UE) according to an exemplary embodiment.
FIG. 15 is a block diagram of a base station according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with embodiments of the disclosure. Instead, they are merely examples of apparatuses and methods consistent with aspects related to the embodiments of the disclosure as recited in the attached claims.

The terms configured in the embodiments of the disclosure are only for the purpose of describing specific embodiments, and are not intended to limit the embodiments of the disclosure. The singular forms of "a" and "the" configured in the embodiments of the disclosure and the attached claims are also intended to include plural forms, unless the context clearly indicates other meanings. It is understandable that the term "and/or" as configured herein refers to and includes any or all possible combinations of one or more associated listed items.

It is understandable that although the terms "first", "second", and "third" may be configured in the embodiments of the disclosure to describe various types of information, these terms are not intended to be configured to limit the information. These terms are only configured to distinguish the same type of information from each other. For example, without departing from the scope of the embodiments of the disclosure, the first information may also be referred to as the second information, and similarly, the second information may also be referred to as the first information. Depending on the context, the term "if" as configured herein may be interpreted as "when", "while" or "in response to determining".

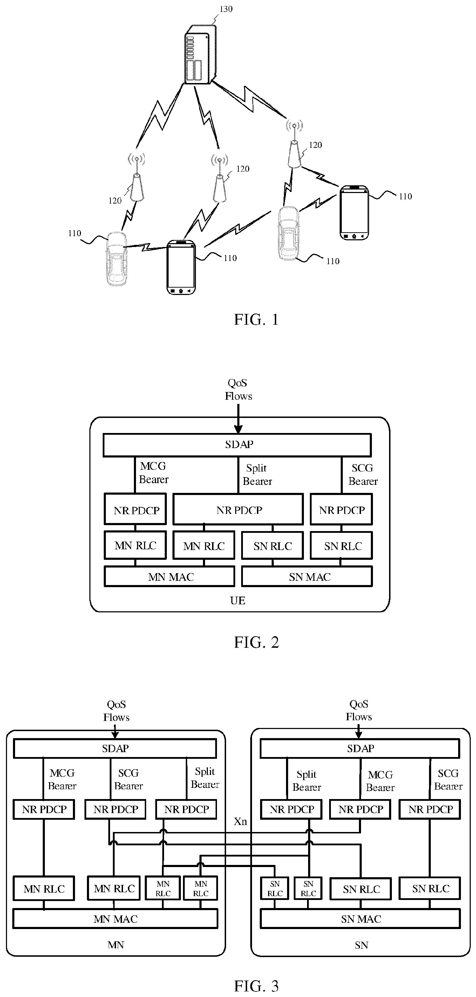

FIG. 1 is a structural diagram of a wireless communication system according to an embodiment of the disclosure. As illustrated in FIG. 1, the wireless communication system is a communication system based on cellular mobile communication technology. The wireless communication system includes: a plurality of user equipments (UEs) 110 and a plurality of base stations 120.

The UE 110 may be a device that provides voice and/or data connectivity to a user. The UE 110 may communicate with one or more core networks via a radio access network (RAN). The UE 110 may be an Internet of Things (IoT) UE, such as a sensor device, a mobile phone (also known as a "cellular" phone), and a computer with the IoT UE. For example, the UE 110 may be a stationary, portable, pocket-sized, handheld, computer-integrated, or vehicle-mounted device, such as, a station (STA), a subscriber unit, a subscriber station, a mobile station, a mobile, a remote station, an access point, a remote terminal, an access terminal, a user terminal, a user agent, a user device, or a UE. Alternatively, the UE 110 may also be an unmanned aerial vehicle device. Alternatively, the UE 110 may also be a vehicle-mounted device, for example, an in-vehicle computer with a wireless communication function, or a wireless UE externally connected to the in-vehicle computer. Alternatively, the UE 110 may also be a roadside device, for example, a street light, a traffic light, or other roadside device with the wireless communication function.

The base station 120 may be a network side device in the wireless communication system. The wireless communication system may be the 4th generation mobile communication (4G) system, also known as a long term evolution (LTE) system. Alternatively, the wireless communication system may also be the 5th generation mobile communication (5G) system, also known as new radio (NR) system or 5G NR system. Alternatively, the wireless communication system may be any next generation system of the 5G system. The access network in the 5G system may be referred to as a new generation-RAN (NG-RAN).

The base station 120 may be an evolved base station (eNB) in the 4G system. Alternatively, the base station 120 may be a base station (gNB) with a centralized distributed architecture in the 5G system. When the base station 120 adopts the centralized distributed architecture, the base station 120 usually includes a central unit (CU) and at least two distributed units (DUs). The CU is equipped with protocol stacks of a packet data convergence protocol (PDCP) layer, a radio link control (RLC) layer, and a media access control (MAC) layer. The DU is equipped with a protocol stack of a physical (PHY) layer. The specific implementations of the base station 120 is not limited in the embodiments of the disclosure.

A wireless connection may be established between the base station 120 and the UE 110 via a radio interface. In different implementations, the radio interface is a radio interface based on the 4G standard. Alternatively, the radio interface is a radio interface based on the 5G standard, such as a NR. Alternatively, the radio interface may be a radio interface based on the standard of the next generation of 5G.

In some embodiments, an end to end (E2E) connection may be established between the UEs 110 in scenarios, such as, vehicle to vehicle (V2V) communication, vehicle to infrastructure (V2I) communication, and vehicle to pedestrian (V2P) communication in vehicle to everything (V2X) communication.

It is considered that the above-mentioned UE is a terminal in the following embodiments.

In some embodiments, the above wireless communication system may also include a network management device 130.

The plurality of base stations 120 are connected to the network management device 130, respectively. The network management device 130 may be a core network device in the wireless communication system. For example, the network management device 130 may be a mobility management entity (MME) in an evolved packet core (EPC). Alternatively, the network management device may be another core network device, such as a serving gateway (SGW), a public data network gateway (PGW), a policy and charging rules function (PCRF), or a home subscriber server (HSS), etc. Alternatively, the core network device may be a core network device in the 5G, such as an access and mobility management function (AMF), a policy control function (PCF) or a session management function (SMF). The implementation forms of the network management device 130 is not limited in the embodiments of the disclosure.

In order to facilitate understanding of those skilled in the art, the embodiments of the disclosure list a plurality of implementations to clearly illustrate the technical solutions of the embodiments of the disclosure. Certainly, those skilled in the art understand that a plurality of embodiments provided by the embodiments of the disclosure may be executed separately, or may be executed together with a method of other embodiments in the embodiments of the disclosure, or may be executed alone or in combination with some methods in other related arts, which is not limited in the embodiments of the disclosure.

It should be noted that the embodiments of the disclosure involve a plurality of execution entities, when one execution entity sends a transmission to another execution entity, it may mean that the one execution entity directly sends the transmission to the other execution entity, or that the one execution entity sends the transmission to the other execution entity through any other device, which is not limited in the embodiments of the disclosure.

In order to better understand the technical scheme described in any embodiment of the disclosure, some related arts are explained firstly.

In the related arts, radio access network (RAN) visible quality of experience (QoE) (RVQoE) metrics are configured by a gNB. A subset of QoE metrics is reported by the UE as an explicit information element (IE) readable by the gNB. The RVQoE report of an RVQoE measurement may be configured by the gNB for network optimization. The gNB configures the RVQoE metrics to collect all or part of available RVQoE metrics. An RVQoE metric set is a subset of a partial metrics of the QoE metric configuration that has been configured to be encapsulated in a transparent container. Protocol data unit (PDU) session identity(s) (ID(s)) and/or quality of service (QoS) flow ID (QFI) corresponding to a QoE measurement service can also be reported by the UE, and an RVQoE measurement result (such as an RVQoE report) is reported at the same time.

A plurality of RAN visible application layer measurement configurations and reports are supported to be performed at the same time, and each RAN visible application layer measurement configuration and report (i.e. RVQoE report) uses the same radio resource control (RRC) identifier as an application layer measurement configuration and report. After receiving an RAN visible application layer measurement configuration, a UE RRC layer forwards the measurement configuration to the application layer, and indicates a service type, the RRC identifier and/or a post period. Only when an application layer measurement configuration corresponding to the same service type is configured on the UE, the RAN visible layer configuration can be configured. The application layer sends the RAN visible application layer measurement report associated with the RRC identifier to a UE access stratum (AS). The UE can send the RAN visible application layer measurement report and the application layer measurement report to the gNB in the same MeasurementReportAppLayer message. The gNB can release one or more RAN visible application layer measurement configurations from the UE at any time in an RRCReconfiguration message.

In R18, it is necessary to support the collection of RVQoE information such as the RVQoE report in a dual connectivity (DC) scenario for network optimization. The RVQoE report may be sent to a secondary node (SN), a master node (MN), or the SN and the MN. The MN/SN needs to know whether the RVQoE report corresponds to its own bearer.

In the DC scenario, a mapping relationship between a QoS flow and a DRB may be shown in FIG. 2 and FIG. 3. FIG. 2 illustrates a wireless protocol architecture of a master cell group (MCG) bearer, a secondary cell group (SCG) bearer and a split bearer, from the perspective of the UE, for multi-radio-DC (MR-DC) cooperating with 5G core network (5GC) (next generation E-UTRA NR-DC (NGEN-DC), New Radio E-UTRA-DC (NE-DC) and NR-DC). FIG. 3 illustrates a network side protocol termination option for an MCG bearer, an SCG bearer and a slice bearer in the MR-DC with the 5GC (NGEN-DC, NE-DC and NR-DC).

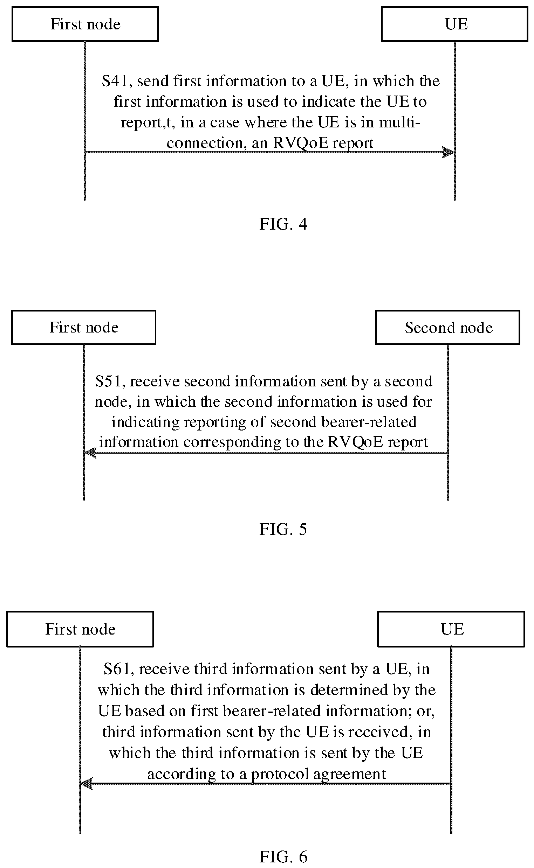

As illustrated in FIG. 4, an embodiment of the disclosure provides a measurement report processing method. The method is performed by a first node and includes the following step.

At step S41, first information is sent to a UE, in which the first information is configured to indicate the UE to report, in a case where the UE is in multi-connection, an RVQoE report.

The UE may be various types of mobile terminals or fixed terminals. For example, the UE includes, but is not limited to, a mobile phone, a computer, a server, a wearable device, a game control platform, a multimedia device or various sensors.

The first node and a second node may be access network devices. The access network device includes, but is not limited to, a base station. The base station may be various types of base stations, including but not limited to at least one of: a 3G base station, a 4G base station, a 5G base station or other evolved base stations. Alternatively, the first node or the second node may be logical nodes, functions or entities configured to achieve the functions which are flexibly arranged in an access network.

In an embodiment, the first node is an MN, and the second node is an SN.

In another embodiment, the first node is an SN, and the second node is an MN.

In further another embodiment, the first node is a first base station, and the second node is a second base station. The first base station and the second base station may be any two base stations.

The measurement report processing method according to these embodiments of the disclosure is performed by the first node and includes: sending the first information to the UE, in which the first information is configured to indicate the reporting of the RVQoE report.

The multi-connection refers to two or more connections, such as DC.

The measurement report processing method according to embodiments of the disclosure is performed by the first node and includes: sending the first information to the UE, in which the first information is configured to indicate the UE to report, when the UE is in the DC, the RVQoE report.

The first information may be information related to the RVQoE report.

The first information is configured to indicate the UE to report, when the UE is in the multi-connection, the RVQoE report to the first node and/or the second node. The first information is configured for the first node and/or the second node to perform a resource optimization operation.

In some embodiments, the first information includes, but is not limited to, at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

The RVQoE report configuration information is configured to indicate that the network node to which the UE reports the RVQoE report is the first node, the second node, or the first node and the second node. Alternatively, the RVQoE report configuration information is configured to indicate that the network node to which the UE reports the RVQoE report is the MN, the SN, or the MN and the SN.

In some embodiments, the RVQoE report configuration information includes, but is not limited to, at least one of: node type information, cell type information, bearer type information, a cell ID or a bearer ID.

According to an embodiment, the RVQoE report configuration information may be the node type information. For example, the node type information may indicate, but is not limited to, an MN, an SN, and/or MN+SN.

According to another embodiment, the RVQoE report configuration information may be the cell type information. For example, the cell type information may indicate, but is not limited to, an MCG, an SCG, and/or MCG+SCG.

According to further another embodiment, the RVQoE report configuration information may be the bearer type information. For example, the bearer type information may indicate, but is not limited to, an MCG bearer, an SCG bearer, and/or a split bearer.

It should be understood that the RVQoE report configuration information is not limited to the above examples.

In some embodiments, the first bearer-related information includes, but is not limited to, at least one of:
at least one PDU session ID;
at least one QFI; or
at least one DRB ID.

In some embodiments, the second indication information is configured to indicate the UE to report, upon occurrence of a specific event, the first bearer-related information, and the specific event includes, but is not limited to, at least one of:
an application layer session start event; or
an event where a bearer corresponding to an application layer measurement changes.

In an embodiment, the RVQoE report includes any QoE information. The RVQoE report is a configuration and/or a result of an RVQoE measurement.

In an embodiment, the RVQoE report may be an RAN visible application layer measurement report.

In these embodiments of the disclosure, the first information is sent to the UE. The first information is configured to indicate the UE to report the RVQoE report when the UE is in the multi-connection. In this way, when the UE is in multi-connection, the RVQoE report is able to be reported accurately (e.g. to a network node through which application layer data passes), which is beneficial to the resource optimization of network node(s) (such as the first node and/or the second node).

For example, when the MN receives the RVQoE report, and a QoS flow is mapped to a DRB by the SN, by reporting the RVQoE report accurately, the MN may know exactly whether to read QoE information in the RVQoE report and perform the resource optimization based on the QoE information. For another example, when the SN receives the RVQoE report, and the QoS flow is mapped to the DRB by the MN, by reporting the RVQoE report accurately, the SN may know exactly whether to read the QoE information in the RVQoE report and perform the resource optimization based on the QoE information.

It should be noted that those skilled in the art understand that the method provided by the embodiments of the disclosure may be executed alone or together with some methods in the embodiments of the disclosure or some methods in the related arts.

As illustrated in FIG. 5, an embodiment of the disclosure provides a measurement report processing method. The method is performed by a first node and includes the following step.

At step S51, second information sent by a second node is received, in which the second information is configured to indicate reporting of second bearer-related information corresponding to the RVQoE report.

In an embodiment, step S51 is performed before step S41.

In some embodiments of the disclosure, the first node and the second node may be respectively the first node and the second node in the above embodiments. The RVQoE report may be the RVQoE report in the above embodiment.

The second information is information, from the second node, related to the RVQoE report.

In some embodiments, the second bearer-related information includes, but is not limited to, at least one of:
a DRB ID corresponding to an RVQoE measurement;
the first bearer-related information; or
bearer mapping information, in which the bearer mapping information is configured to indicate a mapping relationship between a DRB ID and a PDU session ID and/or a QFI.

In this way, in these embodiments of the disclosure, the first node may receive the second information related to the RVQoE report from the second node, which facilitates to determine the first information related to the RVQoE report, in which the first information is configured to indicate the UE to report the RVQoE report.

The measurement report processing method provided by an embodiment of the disclosure is performed by the first node and includes: determining the RVQoE report configuration information according to the second information.

In some embodiments, determining the RVQoE report configuration information according to the second information includes at least one of:
determining the RVQoE report configuration information according to the DRB ID corresponding to the RVQoE measurement;
determining the RVQoE report configuration information according to the first bearer-related information; or
determining the RVQoE report configuration information according to the bearer mapping information.

In some embodiments of the disclosure, the first bearer-related information may be the first bearer-related information in the above embodiments. The RVQoE report configuration information may be the RVQoE report configuration information in the above embodiments.

The RVQoE report configuration information includes, but is not limited to, at least one of: node type information, cell type information, bearer type information, a cell ID or a bearer ID.

For example, the DRB ID corresponding to the RVQoE measurement may be one or more DRB lists.

For example, in a case where the first bearer-related information is the QFI, the bearer mapping information indicates a mapping relationship between the QFI and the DRB ID. The first node may determine the DRB ID corresponding to the QFI based on the QFI and the bearer mapping information, determine the corresponding bearer type information (such as the MCG bearer, the SCG bearer or the split bearer) according to the DRB ID, and determines, according to the corresponding bearer type information, the network node to which the UE reports indicated by the RVQoE report configuration information.

In these embodiments of the disclosure, the first node may accurately determine the RVQoE report configuration information according to the second information. That is, the first node may accurately determine the network node to which the UE needs to report the RVQoE report.

In some embodiments, the RVQoE report configuration information is configured to indicate an RVQoE report configuration of at least one RVQoE measurement. One RVQoE measurement corresponds to one measurement configuration application layer ID and one RVQoE report configuration.

The RVQoE report configuration information includes one or more RVQoE report configurations. One RVQoE report configuration corresponds to one RVQoE measurement.

In this way, according to this embodiment of the disclosure, different RVQoE report configurations may be determined for different RVQoE measurements, so as to report the RVQoE report with smaller granularity.

In some embodiments, the network node, indicated by the RVQoE report configuration, to which the RVQoE report is reported includes one of:
an MN, an SN, or MN+SN; or
an MCG, an SCG, or MCG+SCG.

The RVQoE report configuration belongs to an enumeration type. For example, the RVQoE report configuration may be {SN, MN, SN+MN} or {SCG, MCG, SCG+MCG}.

In other embodiments, the RVQoE report configuration information may also be of an enumeration type.

In some embodiments, one bit set of the RVQoE report configuration is configured to indicate one RVQoE report configuration. Different bits in the bit set are configured to indicate different network nodes. The bit set includes one or more bits, and is considered as a bit stream.

Different values of a bit represent different reporting situations. For example, when the bit value is a first value, it indicates that reporting is required; when the bit value is a second value, it indicates that there is no need to report.

For example, the RVQoE report configuration is a bit stream, in which each bit represents a network node in the DC. For example, a first bit represents the MN and a second bit represents the SN. When the first bit is "0", it indicates that there is no need to report to the MN, and when the first bit is "1", it indicates that reporting to the MN is required. When the second bit is "0", it indicates that there is no need to report to the SN, and when the second bit is "1", it indicates that the reporting to the SN is required.

In this way, according to this embodiment of the disclosure, it may be determined that the RVQoE report configuration belongs to the enumeration type, and it may be determined whether to report the RVQoE report for each MN/SN or MN+SN.

It should be noted that those skilled in the art understand that the method provided by the embodiments of the disclosure may be executed alone or together with some methods in embodiments of the disclosure or some methods in the related arts.

The measurement report processing method provided by an embodiment of the disclosure is performed by the first node and includes: receiving third information sent by the UE.

The third information is information related to the first bearer-related information. In other embodiments, the third information may be information related to the second bearer-related information.

As illustrated in FIG. 6, an embodiment of the disclosure provides a measurement report processing method. The method is performed by a first node and includes the following step.

At step S61, third information sent by a UE is received, in which the third information is determined by the UE based on first bearer-related information; or third information sent by a UE is received, in which the third information is sent by the UE according to a protocol agreement.

In an embodiment, step S61 is performed before step S41.

In some embodiments of the disclosure, the first bearer-related information may be the first bearer-related information in the above embodiments. RVQoE report configuration information may be the RVQoE report configuration information in the above embodiments.

In some embodiments, the third information is sent via being included in a message configured to send a status indication of an application layer whose session starts, and/or the third information is sent in a case where a bearer corresponding to an application layer measurement changes.

For example, the first node receives a message sent by the UE, and the message includes the third information and the status indication of an application layer whose session starts. Alternatively, the first node receives the third information sent by the UE, and the third information is sent by the UE in the case where the bearer corresponding to the application layer measurement changes. Alternatively, the first node receives the third information sent by the UE, and the third information is sent according to the protocol agreement.

In this embodiment of the disclosure, the third information may be obtained from the UE via the first node. Alternatively, the UE may actively send the third information. Moreover, the UE may send the third information in various ways to adapt to more application scenarios.

The measurement report processing method provided by an embodiment of the disclosure is performed by the first node and includes: determining the RVQoE report configuration information according to the third information.

In an embodiment, determining the RVQoE report configuration information according to the third information includes: determining the RVQoE report configuration information according to the first bearer-related information.

In this embodiment of the disclosure, the RVQoE report configuration information may be accurately determined according to the third information. That is, the network node to which the UE reports the RVQoE report may be determined accurately.

It should be noted that those skilled in the art understand that the method provided by the embodiments of the disclosure may be executed alone or together with some methods in embodiments of the disclosure or some methods in the related arts.

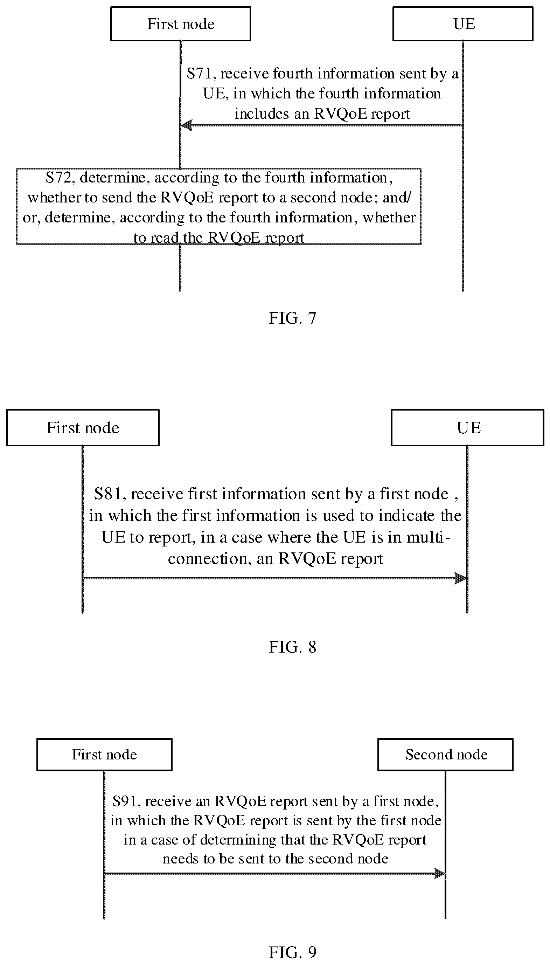

As illustrated in FIG. 7, an embodiment of the disclosure provides a measurement report processing method. The method is performed by a first node and includes the following steps.

At step S71, fourth information sent by a UE is received, in which the fourth information includes an RVQoE report.

At step S72, it is determined, according to the fourth information, whether to send the RVQoE report to a second node; and/or it is determined, according to the fourth information, whether to read the RVQoE report.

The measurement report processing method provided by an embodiment of the disclosure is performed by the first node and includes: receiving the fourth information sent by the UE, in which the fourth information is determined by the UE based on first information. Step S71 may be performed after step S41.

The fourth information may be any message that sends the RVQoE report.

In some embodiments of the disclosure, the RVQoE report may be the RVQoE report in the above embodiments. Second bearer-related information may be the second bearer-related information in the above embodiments.

In some embodiments, at step S72, determining, according to the fourth information, whether to send the RVQoE report to the second node includes: determining, according to the fourth information and the second bearer-related information, whether to send the RVQoE report to the second node.

The measurement report processing method provided by an embodiment of the disclosure is performed by the first node and includes: determining, according to the fourth information and the second bearer-related information, whether to send the RVQoE report to the second node.

In other embodiments, at step S72, determining, according to the fourth information, whether to read the RVQoE report includes: determining, according to the fourth information and the second bearer-related information, whether to read the RVQoE report.

The measurement report processing method provided by an embodiment of the disclosure is performed by the first node and includes: determining, according to the fourth information and the second bearer-related information, whether to send the RVQoE report to the second node.

For example, in a case where the first node is the MN and the second node is the SN, the second bearer-related information includes a DRB ID corresponding to an RVQoE measurement, and the DRB ID indicates the MCG bearer, the first node then needs to read the RVQoE report and does not need to send the RVQoE report to the second node. For another example, in a case where the first node is the MN and the second node the a SN, the second bearer-related information includes a DRB ID corresponding to an RVQoE measurement, and the DRB ID indicates the SCG bearer, the first node then does not need to read the RVQoE report but to send the RVQoE report to the second node.

In this way, according to this embodiment of the disclosure, the required RVQoE report may be accurately obtained by receiving the fourth information from the UE. Furthermore, it may be determined accurately, by the fourth information, whether the first node needs to read the RVQoE report and/or whether it needs to send the RVQoE report to the second node.

In some embodiments, the fourth information includes: third indication information, and the third indication information is configured to indicate whether to send the RVQoE report to the second node.

At step S72, determining, according to the fourth information, whether to send the RVQoE report to the second node includes: determining, according to the third indication information, whether to send the RVQoE report to the second node.

The measurement report processing method provided by an embodiment of the disclosure is performed by the first node and includes: determining, according to the third indication information, whether to send the RVQoE report to the second node.

For example, the first node receives the fourth information which includes the RVQoE report and the third indication information. In a case where the third indication information indicates that the RVQoE report needs to be sent to the second node, the first node determines, based on the third indication information, which the RVQoE report needs to be sent. Alternatively, in a case where the third indication information indicates that there is no need to send the RVQoE report to the second node, the first node determines, based on the third indication information, that there is no need to send the RVQoE report to the second node.

The third indication information may be configured to indicate whether to send the RVQoE report to the second node through taking different values or symbols. For example, when the third indication information taking a third value, it indicates that there is no need to send the RVQoE report to the second node. Alternatively, when the third indication information taking a fourth value, it indicates that the RVQoE report needs to be sent to the second node.

In this way, according to this embodiment of the disclosure, the first node may accurately determine whether to send the RVQoE report to the second node through the fourth information sent by the UE, in which the fourth information carries the third indication information, that is, through a direct or explicit indication from the UE.

In other embodiments, the fourth information includes the third indication information, the third indication information is configured to indicate whether to read the RVQoE report.

At step S72, determining, according to the fourth information, whether to read the RVQoE report includes: determining, according to the third indication information, whether to read the RVQoE report.

The measurement report processing method provided by an embodiment of the disclosure is performed by the first node and includes: determining, according to the third indication information, whether to read the RVQoE report.

In this way, according to this embodiment of the disclosure, the first node may accurately determine whether to read the RVQoE report through the fourth information sent by the UE, in which the fourth information carries the third indication information, that is, through a direct or explicit indication from the UE.

In some embodiments, the fourth information further includes third bearer-related information corresponding to the RVQoE report. The third bearer-related information is configured for the first node or the second node to perform a resource optimization operation.

The measurement report processing method provided by an embodiment of the disclosure is performed by the first node and includes: performing the resource optimization operation according to the third bearer-related information.

The resource optimization operation may be any kind of resource optimization operation for a network node(s) (such as the first node and/or the second node), which is not limited here.

In some embodiments, the third bearer-related information includes at least one of:
at least one DRB ID;
at least one list ID, in which one list ID includes at least one DRB ID;
first timestamp information corresponding to the DRB ID; or
second timestamp information corresponding to the list ID.

In an embodiment, both the first timestamp information and the second timestamp information may be configured to indicate an effective time. For example, the first timestamp information is configured to indicate an effective time of the DRB ID, and the second timestamp information is configured to indicate an effective time of the list ID.

In an embodiment, both the first time stamp information and the second time stamp information may be configured to indicate a starting time of usage. For example, the first timestamp information is configured to indicate a starting time of using the DRB ID, and the second timestamp information is configured to indicate a staring time of using the list ID.

In an embodiment, both the first time stamp information and the second time stamp information may be configured to indicate an end time of usage. For example, the first timestamp information is configured to indicate an end time of using the DRB ID, and the second timestamp information is configured to indicate an end time of using the list ID.

In an embodiment, both the first timestamp information and the second timestamp information may be configured to indicate a duration of usage. For example, the first timestamp information is configured to indicate a duration of using the DRB ID, and the second timestamp information is configured to indicate a duration of using the list ID.

In this way, according to this embodiment of the disclosure, the resource optimization operation of the first node may be determined through the third bearer-related information. For example, when the third bearer-related information includes the DRB ID of at least one DRB corresponding to the first node, the resource optimization operation may be performed on the first node. For another example, the resource optimization operation may be performed on the first node according to time information indicated by the first time stamp information.

The measurement report processing method provided by an embodiment of the disclosure is performed by the first node and includes: determining, according to the second bearer-related information, whether to send the RVQoE report to the second node.

For example, the first node is the MN and the second node is the SN. In a case where one DRB ID in the second bearer-related information indicates the SCG bearer, the first node determines to send the RVQoE report to the second node.

In this embodiment of the disclosure, the first node may accurately determine, according to the second bearer-related information, whether to send the RVQoE report to the second node. This embodiment of the disclosure provides another way to determine whether to send the RVQoE report to the second node, which is suitable for more application scenarios.

It should be noted that those skilled in the art understand that the method provided by the embodiments of the disclosure may be executed alone or together with some methods in embodiments of the disclosure or some methods in the related arts.

The following is a measurement report processing method performed by a UE, which is similar to the description of the measurement report processing method performed by the first node. Moreover, technical details not disclosed in the embodiments of the measurement report processing method performed by the UE may be referred to the description for the examples of the measurement report processing method performed by the first node, which will not be described in detail here.

As illustrated in FIG. 8, an embodiment of the disclosure provides a measurement report processing method. The method is performed by a UE and includes the following step.

At step S81, first information sent by a first node is received, in which the first information is configured to indicate the UE to report, in a case where the UE is in multi-connection, an RVQoE report.

In some embodiments of the disclosure, the first node and the second node may respectively be the first node and the second node in the above embodiments. The first information and the multi-connection may respectively be the first information and the multi-connection in the above embodiments. The RVQoE report may be the RVQoE report in the above embodiments.

For example, the first node is an MN, and the second node is an SN.

For another example, the first node is an SN, and the second node is an MN.

For example, the first node is a first base station, and the second node is a second base station. The first base station and the second base station may be any two base stations.

For example, the multi-connection may refer to two or more connections, such as DC. For example, the first information is configured to indicate the UE to report, when the UE is in the DC, the RVQoE report.

For example, the first information is configured to indicate the UE to report the RVQoE report.

For example, the first information is configured to indicate the UE to report, when the UE is in the multi-connection, the RVQoE report to the first node and/or the second node. The first information is configured for the first node and/or the second node to perform a resource optimization operation.

For example, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

For example, the RVQoE report configuration information includes, but is not limited to, at least one of: node type information, cell type information, bearer type information, a cell ID or a bearer ID.

In some embodiments, the first bearer-related information includes at least one of:
at least one PDU session ID;
at least one QFI; or
at least one DRB ID.

For example, the second indication information is configured to indicate the UE to report, upon occurrence of a specific event, the first bearer-related information, and the specific event includes at least one of:
an application layer session start event; or
an event where a bearer corresponding to an application layer measurement changes.

The measurement report processing method provided by an embodiment of the disclosure is performed by the UE and includes:
determining third information based on the first bearer-related information; and
sending the third information to the first node, in which the third information is configured for the first node to determine the RVQoE report configuration information.

In some embodiments of the disclosure, the third information may be the third information in the above embodiments. The RVQoE report configuration information may be the RVQoE report configuration information in the above embodiments.

The measurement report processing method provided by embodiments of the disclosure is performed by the UE and includes: sending fourth information to the first node, in which the fourth information includes the RVQoE report, and the fourth information is configured for the first node to determine whether to read the RVQoE report and/or whether to send the RVQoE report to a second node.

In some embodiments of the disclosure, the fourth information may be the fourth information in the above embodiments. Third indication information may be the third indication information in the above embodiments. Second bearer-related information and third bearer-related information may respectively be the second bearer-related information and the third bearer-related information in the above embodiments.

For example, the fourth information and the second bearer-related information are configured for the first node to determine whether to send the RVQoE report to the second node.

For example, the fourth information includes the third indication information, and the third indication information is configured to indicate whether the first node sends the RVQoE report to the second node.

For example, the fourth information further includes third bearer-related information corresponding to the RVQoE report, in which the third bearer-related information is configured for the first node or the second node to perform a resource optimization operation.

For example, the third bearer-related information includes at least one of:
at least one DRB ID;
at least one list ID, in which one list ID includes at least one DRB ID;
first timestamp information corresponding to the DRB ID; or
second timestamp information corresponding to the list ID.

In some embodiments, the third bearer-related information further includes bearer information.

The method includes: adding the bearer information to the fourth information based on an AS of the UE;

and/or obtaining the bearer information from an AS of the UE based on an application layer of the UE , and adding the bearer information to the fourth information based on the application layer of the UE.

The measurement report processing method provided by an embodiment of the disclosure is performed by the UE and includes:
adding the bearer information to the fourth information based on the AS of the UE;
   and/or
obtaining the bearer information from the AS of the UE based on the application layer of the UE, and adding the bearer information to the fourth information based on the application layer of the UE.

In some embodiments, the bearer information refers to a bearer corresponding to the RVQoE report. The bearer information includes, but is not limited to, a DRB ID list.

In some embodiments, adding the bearer information to the fourth information based on the AS of the UE, includes:
determining, by the AS of the UE, the bearer information according to a PDU session ID, a QFI and bearer mapping information received from an upper layer (i.e., the application layer of the UE), and including the bearer information to the fourth information.

For example, the AS of the UE determines one or more PDU session IDs and/or QFIs included in a RAN visible application layer measurement report from the upper layer (i.e., the application layer of the UE), performs a mapping relationship between the DRB ID and the PDU session ID and/or the QFI, and obtains the bearer information indicating the corresponding PDU session ID and/or the QFI. The AS of the UE adds the bearer information to the fourth information, and the bearer information may include one or more DRB IDs (or DRB lists).

Based on the above example, after generating the RVQoE report, the application layer (i.e., the upper layer) of the UE includes at least one DRB ID corresponding to the RVQoE report to the RAN visible application layer measurement report. The upper layer (i.e., the application layer of the UE) may obtain the bearer information from the AS of the UE (e.g., via an AT instruction), and add the bearer information to the fourth information.

In this way, in this embodiment of the disclosure, the AS of the UE may perform a mapping between the QFI and the DRB ID, which may be added to the fourth information through the AS of the UE or the application layer of the UE. In this way, the mapping of the DRB ID and the PDU session ID and/or the QFI may be realized in various ways (for example, the AS of the UE or the application layer of the UE performs the mapping), thereby accommodating a wider range of application scenarios.

The above implementations may be referred to the description on the first node side, which will not be repeated here.

It should be noted that those skilled in the art understand that the method provided by the embodiments of the disclosure may be executed alone or together with some methods in embodiments of the disclosure or some methods in the related arts.

The following is a measurement report processing method performed by a second node, which is similar to the description of the measurement report processing method performed by the first node and/or the UE. Moreover, technical details not disclosed in the embodiments of the measurement report processing method performed by the second node may be referred to the description for the examples of the measurement report processing method performed by the first node and/or the UE, which will not be described in detail here.

As illustrated in FIG. 9, an embodiment of the disclosure provides a measurement report processing method. The method is performed by a second node and includes the following step.

At step S91, an RVQoE report sent by a first node is received, in which the RVQoE report is sent by the first node in a case of determining that the RVQoE report needs to be sent to the second node.

In some embodiments, the RVQoE report is sent by a UE in a case of receiving the first information sent by the first node. The first information is configured to indicate the UE to report, in a case where the UE is in multi-connection, the RVQoE report.

In some embodiments of the disclosure, the first node and the second node may respectively be the first node and the second node in the above embodiments. The first information and the multi-connection may respectively be the first information and the multi-connection in the above embodiments. The RVQoE report may be the RVQoE report in the above embodiments.

For example, the first node is an MN, and the second node is an SN.

For another example, the first node is an SN, and the second node is an MN.

For example, the first node is a first base station, and the second node is a second base station. The first base station and the second base station may be any two base stations.

For example, the multi-connection may refer to two or more connections, such as DC. For example, the first information is configured to indicate the UE to report, when the UE is in the DC, the RVQoE report.

For example, the first information is configured to indicate the UE to report the RVQoE report.

For example, the first information is configured to indicate the UE to report, when the UE is in the multi-connection, the RVQoE report to the first node and/or the second node. The first information is configured for the first node and/or the second node to perform a resource optimization operation.

For example, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

For example, the RVQoE report configuration information includes, but is not limited to, at least one of: node type information, cell type information, bearer type information, a cell ID or a bearer ID.

The measurement report processing method provided by an embodiment of the disclosure is performed by the second node and includes: sending second information to the first node, in which the second information is configured to indicate reporting of second bearer-related information corresponding to the RVQoE report, and the second information is configured for the first node to determine the RVQoE report configuration information.

In some embodiments of the disclosure, the second information may be the second information in the above embodiments. The second bearer-related information may be the second bearer-related information in the above embodiments.

For example, the second bearer-related information includes at least one of:
a DRB ID corresponding to an RVQoE measurement;
the first bearer-related information; or
bearer mapping information, in which the bearer mapping information is configured to indicate a mapping relationship between the DRB ID and a PDU session ID and/or a QFI.

The above implementations may be referred to the description on the first node and/or the UE side, which will not be repeated here.

It should be noted that those skilled in the art understand that the method provided by the embodiments of the disclosure may be executed alone or together with some methods in embodiments of the disclosure or some methods in the related arts.

In order to further explain any embodiment of the disclosure, several specific embodiments will be provide below.

### Example 1

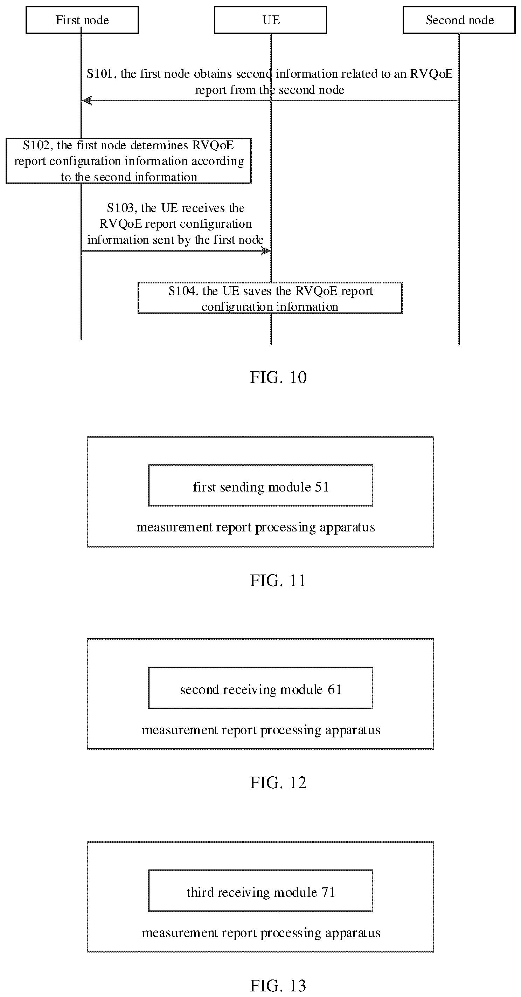

As illustrated in FIG. 10, an embodiment of the disclosure provides a measurement report processing method. The method is performed by a communication device. The communication device includes a first node, a UE and a second node. The method includes the following steps.

At step S101, the first node obtains second information related to an RVQoE report from the second node.

For example, the first node is an MN, and the second node is an SN. Alternatively, the first node is an SN, and the second node is an MN.

For example, the second information is configured to indicate reporting of second bearer-related information corresponding to the RVQoE report.

For example, the second bearer-related information includes, but is not limited to, at least one of:
a DRB ID corresponding to an RVQoE measurement;
first bearer-related information, in which the first bearer-related information includes, but is not limited to, at least one of: at least one PDU session ID, at least one QFI or at least one DRB ID; or
bearer mapping information, in which the bearer mapping information is configured to indicate a mapping relationship between a DRB ID and a PDU session ID and/or a QFI.

At step S102, the first node determines RVQoE report configuration information according to the second information.

In an optional embodiment, the RVQoE report configuration information is configured to indicate RVQoE report configuration of at least one RVQoE measurement. One RVQoE measurement corresponds to one measurement configuration application layer ID and one RVQoE report configuration.

In an optional embodiment, the RVQoE report configuration belongs to an enumeration type. For example, the RVQoE report configuration may be {SN, MN, SN+MN} or {SCG, MCG, SCG+MCG}.

In an optional embodiment, the RVQoE report configuration is a bit stream, in which each bit represents a network node in the DC. For example, a first bit represents the MN and a second bit represents the SN. When the bit is "0", it indicates that there is no need to report to the MN and/or the SN, and when the bit is "1", it indicates that reporting to the MN and/or the SN is required.

At step S103, the UE receives the RVQoE report configuration information sent by the first node.

At step S104, the UE saves the RVQoE report configuration information.

In an optional embodiment, the AS of the UE receives a RAN visible application layer measurement report (i.e., the RVQoE Report) from an upper layer (i.e., an application layer of the UE), and sends the RVQoE report to the first node and/or the second node according to the measurement configuration application layer ID (e.g., IDmeasConfigAppLayerId) and the RVQoE report configuration information in the RAN visible application layer measurement report.

In an optional embodiment, the UE (or the AS of the UE) is only able to send the RVQoE report to the first node, and the first node determines, according to the second information and its own bearer information, whether to send the RVQoE report to the second node.

In an optional embodiment, when the first node determines to send the RVQoE report to the second node, the first node sends fourth information, which has had the bearer information added and carries the RVQoE report, to the second node. The fourth information is configured to indicate the bearer information corresponding to the RVQoE report. The fourth information is configured for the second node to perform a resource optimization operation. The bearer information may indicate a DRB list corresponding to RVQoE information (such as QoS flow) in the RVQoE report.

In another optional embodiment, the UE (or the AS of the UE) is only able to send the RVQoE report to the second node, and indicates, via the RVQoE report configuration information, that the first node also needs to know the RVQoE report. The UE adds the third indication information to the RVQoE report or carries the third indication information and the RVQoE report in the fourth information. The third indication information is configured to indicate the first node to send the RVQoE report to the second node.

In this way, the UE may send the RVQoE report to a relevant network node(s), such as the first node and/or the second node, through a configuration of the network side, so that the relevant node(s) may realize resource optimization.

### Example 2

An embodiment of the disclosure provides a measurement report processing method. The method is performed by a communication device. The communication device includes a first node and a UE. The method includes the following steps.

At step S1101, the UE receives first information from the first node.

For example, the first information includes, but is not limited to, one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

For example, the RVQoE report configuration information includes, but is not limited to, at least one of: node type information, cell type information, bearer type information, a cell ID or a bearer ID.

At step S1102, in a case where the UE obtains an RVQoE report, the UE sends fourth information including the RVQoE report to the first node.

In an optional embodiment, when there is a RAN visible application layer measurement report (i.e., the RVQoE report) from an upper layer (i.e., an application layer of the UE), the AS of the UE sends the fourth information including the RVQoE report and third indication information to the first node and/or the second node. The fourth information also includes DRB-related bearer information.

In an optional embodiment, in a case where the UE determines that the first information includes the first indication information, the AS of the UE sends the first indication information to the upper layer (i.e., the application layer of the UE). In a case where the AS of the UE determines that one or more PDU session IDs and/or QFIs are included in the RAN visible application layer measurement report from the upper layer (i.e., the application layer of the UE), the AS of the UE executes a mapping relationship between the DRB ID and the PDU session ID and/or the QFI, and obtains bearer information indicating the PDU session ID and/or the QFI. The AS of the UE adds the bearer information to the fourth information, and the bearer information may include one or more DRB IDs (or DRB lists).

In an optional embodiment, in a case where the UE determines that the first information includes the first indication information, the AS of the UE sends the first indication information to the upper layer (i.e., the application layer of the UE). After the upper layer generates the RVQoE report, at least one DRB ID corresponding to the RVQoE report is included in the RAN visible application layer measurement report. The upper layer (i.e., the application layer of the UE) may obtain the bearer information from the AS of the UE (e.g., through an AT instruction), and add the bearer information to the fourth information.

In an optional embodiment, the fourth information may include third bearer-related information corresponding to the RVQoE report. The third bearer-related information includes, but is not limited to, at least one of: at least one DRB ID or at least one list ID. One list ID includes at least one DRB ID, a first timestamp information corresponding to the DRB ID, or a second timestamp information corresponding to the list ID.

In an optional embodiment, the first node and/or the second node receives the fourth information and determines, according to the fourth information, whether to read the RVQoE report and/or whether to send the RVQoE report to other network nodes.

In this way, the UE side may add the fourth indication information and/or the third bearer information and/or the DRB-related bearer information to the fourth information.

### Example 3

An embodiment of the disclosure provides a measurement report processing method. The method is performed by a communication device. The communication device includes a first node and a UE. The method includes the following steps.

At step S1201, the UE receives first information from the first node.

For example, the first information at least includes second indication information. The second indication information is configured to indicate the UE to report, upon occurrence of a specific event, first bearer-related information corresponding to the RVQoE. The specific event includes, but is not limited to, at least one of: an application layer session start event or an event where a bearer corresponding to an application layer measurement changes.

For example, the first information may also include, but is not limited to, one of: RVQoE report configuration information and first indication information.

The AS of the UE may report the second indication information to an upper layer (i.e., the application layer of the UE) to indicate the upper layer to report, upon occurrence of a specific event, the first bearer-related information.

At step S1202, for each measurement configuration application layer ID (such as measConfigAppLayerId), in a case where the UE receives the first bearer-related information from the upper layer, the UE determines third information based on the first bearer-related information and sends the third information to the first node and/or a second node.

In an optional embodiment, the third information is sent via being included in a message configured to send a status indication of an application layer whose session starts, and/or the third information is sent in a case where a bearer corresponding to an application layer measurement changes.

In another optional embodiment, the third information is sent to the first node and/or the second node separately.

In an optional embodiment, the third information may include, but is not limited to, at least one of: at least one PDU session ID, at least one QFI, and at least one DRB ID.

In an optional embodiment, the first node and/or the second node generates RVQoE report configuration information according to the third information.

In this way, the UE side and the network side (the first node and/or the second node) may negotiate the RVQoE report configuration information.

The above implementations may be referred to the description on the first node and/or the UE side, which are not repeated here.

It should be noted that those skilled in the art understand that the method provided by the embodiments of the disclosure may be executed alone or together with some methods in other embodiments of the disclosure or some methods in related arts.

As illustrated in FIG. 11, an embodiment of the disclosure provides measurement report processing apparatus. The apparatus includes:
a first sending module 51, configured to send first information to a UE, in which the first information is configured to indicate the UE to report, in a case where the UE is in multi-connection, an RVQoE report.

The apparatus provided by the embodiments of the disclosure may be a first node.

In some embodiments, the first node is an MN, and the second node is an SN; or
the first node is an SN, and the second node is an MN.

In some embodiments, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

In some embodiments, the first bearer-related information includes at least one of:
at least one PDU session ID;
at least one QFI; or
at least one DRB ID.

In some embodiments, the second indication information is configured to indicate the UE to report, upon occurrence of a specific event, the first bearer-related information, and the specific event includes at least one of:
an application layer session start event; or
an event where a bearer corresponding to an application layer measurement changes.

In some embodiments, the apparatus includes: a first receiving module, configured to receive second information sent by a second node, in which the second information is configured to indicate reporting of second bearer-related information corresponding to the RVQoE report.

In some embodiments, the second bearer-related information includes at least one of:
a DRB ID corresponding to an RVQoE measurement;
the first bearer-related information; or
bearer mapping information, in which the bearer mapping information is configured to indicate a mapping relationship between a DRB ID and a PDU session ID and/or a QFI.

In an embodiment of the disclosure, the apparatus includes: a first processing module, configured to determine the RVQoE report configuration information according to the second information.

In an embodiment of the disclosure, the first receiving module 51 is configured to: receive third information sent by the UE, in which the third information is determined by the UE based on the first bearer-related information.

In an embodiment of the disclosure, the first receiving module 51 is configured to: receive third information sent by the UE, in which the third information is sent by the UE according to a protocol agreement.

In an embodiment of the disclosure, the first processing module is further configured to: determine the RVQoE report configuration information according to the third information.

In some embodiments, the third information is sent via being included in a message configured to send a status indication of an application layer whose session starts, and/or the third information is sent in a case where a bearer corresponding to an application layer measurement changes.

According to the apparatus in an embodiment of the disclosure,
the first receiving module 51 is configured to: receive fourth information sent by the UE, in which the fourth information includes the RVQoE report,
the first processing module is configured to determine, according to the fourth information, whether to send the RVQoE report to a second node; and/or
the first processing module is configured to determine, according to the fourth information, whether to read the RVQoE report.

According to the apparatus in an embodiment of the disclosure, the first processing module is further configured to: determine, according to the fourth information and second bearer-related information, whether to send the RVQoE report to the second node.

In some embodiments, the fourth information includes: third indication information, and the third indication information is configured to indicate whether to send the RVQoE report to the second node.

The first processing module is configured to: determine, according to the third indication information, whether to send the RVQoE report to the second node.

According to the apparatus of the embodiments of the disclosure, the first processing module is configured to: determine, according to the third indication information, whether to send the RVQoE report to the second node

In some embodiments, the fourth information further includes third bearer-related information corresponding to the RVQoE report, and the third bearer-related information is configured for the first node or the second node to perform a resource optimization operation.

In some embodiments, the third bearer-related information includes at least one of:
at least one DRB ID;
at least one list ID, in which one list ID includes at least one DRB ID;
first timestamp information corresponding to the DRB ID; or
second timestamp information corresponding to the list ID.

The first processing module is configured to: determine, according to second bearer-related information, whether to send the RVQoE report to the second node.

As illustrated in FIG. 12, an embodiment of the disclosure provides a measurement report processing apparatus. The apparatus includes:
a second receiving module 61, configured to receive first information sent by a first node, in which the first information is configured to indicate the UE to report, in a case where the UE is in multi-connection, an RVQoE report.

The apparatus provided by the embodiments of the disclosure may be a UE.

In some embodiments, the first node is an MN, and the second node is an SN; or
the first node is an SN, and the second node is an MN.

In some embodiments, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

In some embodiments, the first bearer-related information includes at least one of:
at least one PDU session ID;
at least one QFI; or
at least one DRB ID.

In some embodiments, the second indication information is configured to indicate the UE to report, upon occurrence of a specific event, the first bearer-related information, and the specific event includes at least one of:
an application layer session start event; or
an event where a bearer corresponding to an application layer measurement changes.

The apparatus according to embodiments of the disclosure includes: a second processing module, configured to determine third information based on the first bearer-related information.

The apparatus according to embodiments of the disclosure includes: a second sending module, configured to send the third information to the first node, in which the third information is configured for the first node to determine the RVQoE report configuration information.

According to the apparatus of embodiments of the disclosure, the second sending module is further configured to: send fourth information to the first node, in which the fourth information includes the RVQoE report, and the fourth information is configured for the first node to determine whether to read the RVQoE report and/or whether to send the RVQoE report to a second node.

In some embodiments, the fourth information and second bearer-related information are configured for the first node to determine whether to send the RVQoE report to the second node.

In some embodiments, the fourth information includes third indication information, and the third indication information is configured to indicate whether the first node sends the RVQoE report to the second node.

In some embodiments, the fourth information further includes third bearer-related information corresponding to the RVQoE report, and the third bearer-related information is configured for the first node or the second node to perform a resource optimization operation.

In some embodiments, the third bearer-related information includes at least one of:
at least one DRB ID;
at least one list ID, in which one list ID includes at least one DRB ID;
first timestamp information corresponding to the DRB ID; or
second timestamp information corresponding to the list ID.

In some embodiments, the third bearer-related information further includes bearer information.

The second processing module is configured to add the bearer information to the fourth information based on an AS of the UE;
and/or
the second processing module is configured to obtain the bearer information from the AS of the UE based on an application layer of the UE, and add the bearer information to the fourth information based on the application layer of the UE.

In some embodiments, the bearer information relates to the bearer corresponding to the RVQoE report, including but not limited to a DRB ID list.

In some embodiments, adding the bear information to the fourth information based on the AS of the UE, includes:
the AS of the UE determining the bearer information according to a PDU session ID and a QFI received from an upper layer and bearer mapping information, and including the bearer information in the fourth information.

According to the apparatus provided in an embodiment of the disclosure,
the second processing module is configured to add the bearer information to the fourth information based on the AS of the UE;
   and/or
the second processing module is configured to obtain the bearer information from the AS of the UE based on the application layer of the UE, and add the bearer information to the fourth information based on the application layer of the UE.

As illustrated in FIG. 13, an embodiment of the disclosure provides a measurement report processing apparatus. The apparatus includes:
a third receiving module 71, configured to receive an RVQoE report sent by a first node, in which the RVQoE report is sent by the first node in a case of determining that the RVQoE report needs to be sent to the second node.

The apparatus provided by the embodiments of the disclosure may be a second node.

In some embodiments, the first node is an MN, and the second node is an SN; or
the first node is an SN, and the second node is an MN.

In some embodiments, the RVQoE report is sent by a UE a in a case of receiving first information sent by the first node. The first information is configured to indicate the UE to report, in a case where the UE is in multi-connection, the RVQoE report.

In some embodiments, the first information includes at least one of:
RVQoE report configuration information, configured to indicate a network node to which the UE reports the RVQoE report;
first indication information, configured to indicate the UE to report a DRB ID of at least one DRB corresponding to the RVQoE report; or
second indication information, configured to indicate the UE to report first bearer-related information corresponding to the RVQoE report.

In an embodiment of the disclosure, the apparatus includes: a third sending module, configured to send second information to the first node, in which the second information is configured to indicate reporting of second bearer-related information corresponding to the RVQoE report, and the second information is configured for the first node to determine the RVQoE report configuration information.

In some embodiments, the second bearer-related information includes at least one of:
a DRB ID corresponding to an RVQoE measurement;
the first bearer-related information; or
bearer mapping information, in which the bearer mapping information is configured to indicate a mapping relationship between a the DRB ID and a PDU session ID and/or a QFI.

It should be noted that those skilled in the art understand that the apparatus provided by the embodiments of the disclosure may be executed alone or together with some apparatuses in the embodiments of the disclosure or some apparatuses in related arts.

With regard to the apparatus in the above embodiments, the specific way in which each module performs an operation has been described in detail in the method embodiments, which will not be described in detail here.

An embodiment of the disclosure provides a communication device. The communication device includes:
a processor; and
a memory for storing instructions executable by the processor;
in which the processor is configured to implement the method for processing a measurement report of any embodiment of the disclosure when executing the executable instructions.

In an embodiment, the communication device may include, but is not limited to, at least one of: a UE and a network device. The network device includes a base station.

The processor may include various types of storage mediums. The storage medium may be a non-transitory computer storage medium, which can continue to remember information stored on the UE after power down.

The processor may be connected to the memory through a bus or the like for reading the executable programs stored on the memory, for example, at least one of the methods shown in FIGs. 4-10.

An embodiment of the disclosure also provides a computer storage medium. The computer storage medium stores a computer executable program, and when the executable program is executed by a processor, the method for processing a measurement report of any embodiment of the disclosure is realized, such as at least one of the methods shown in FIGs. 4-10.

With respect to the apparatus or storage medium in the above embodiments, the specific way in which each module performs an operation has been described in detail in the method embodiments, which will not be described in detail here.

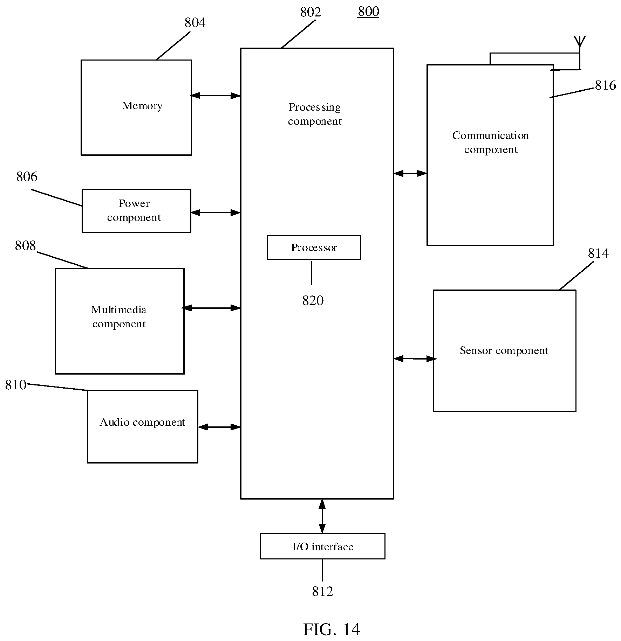

FIG. 14 is a schematic diagram of a UE 800 illustrated according to an exemplary embodiment. For example, the UE 800 may be a mobile phone, a computer, a digital broadcasting UE, a message transceiver device, a game console, a tablet device, a medical device, a fitness device or a personal digital assistant.

As illustrated in FIG. 14, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described methods. Moreover, the processing component 802 may include one or more modules which facilitate the processing component 802 to interact with other components. For example, the processing component 802 may include a multimedia module to facilitate the multimedia component 808 to interact with the processing component 802.

The memory 804 is configured to store various types of data to support the operation of the UE 800. Examples of such data include instructions for any APPs or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the TP, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging APPs. In some embodiments, the sensor component 814 may also include an accelerometer sensor, a gyroscope sensor, a magnetic sensor, a pressure sensor, or a temperature sensor.

The communication component 816 is configured to facilitate communications, wired or wirelessly, between the UE 800 and other devices. The UE 800 can access a wireless network based on a communication standard, such as Wi-Fi, 4G or 5G, or a combination thereof. In an exemplary embodiment, the communication component 816 receives a broadcast signal or broadcast associated information from an external broadcast management system via a broadcast channel. In an exemplary embodiment, the communication component 816 further includes a Near Field Communication (NFC) module to facilitate short-range communications. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In some exemplary embodiments, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In an exemplary embodiment, a non-transitory computer readable storage medium including instructions is provided, such as the memory 804. The in structions are executable by the processor 820 in the UE 800, for performing the above methods. For example, the non-transitory computer-readable storage medium may be a ROM, a Random Access Memory (RAM), a CD-ROM, a magnetic tape, a floppy disc and an optical data storage device.

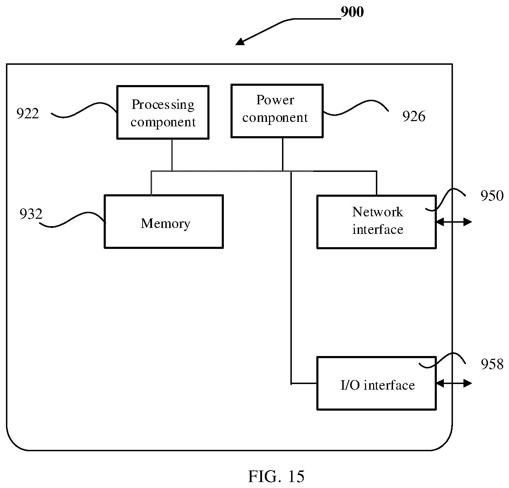

As illustrated in FIG. 15, an embodiment of the disclosure shows the structure of a base station 900. For example, the base station 900 is provided as a network side device. As illustrated in FIG. 15, the base station 900 includes a processing component 922 containing one or more processors, and memory resources represented by a memory 932 for storing instructions, such as APPs, executable by the processing component 922. The APPs stored in the memory 932 may include one or more modules each corresponding to a set of instructions. Moreover, the processing component 922 is configured to execute the instructions to perform any of the aforementioned methods applied to the base station.

The base station 900 may also include a power component 926 configured to perform power management for the base station 900, a wired or wireless network interface 950 configured to connect the base station 900 to a network, and an I/O interface 958. The base station 900 may operate based on an operating system stored in the memory 932, such as Windows Server TM, Mac OS XTM, UnixTM, LinuxTM, FreeBSDTM, or the like.

Other implementation schemes of the disclosure will be apparent to those skilled in the art from consideration of the specification and practice of the disclosure disclosed here. The disclosure is intended to cover any variations, uses, or adaptations of the application following the general principles thereof and including such departures from the disclosure as come within known or customary practice in the art. The specification and embodiments are considered as illustrative only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the attached claims.

## Claims

1. A measurement report processing method, performed by a first node, comprising:
sending first information to a user equipment (UE), wherein the first information is configured to indicate the UE to report, in a case where the UE is in multi-connection, a radio access network (RAN) visible quality of experience (QoE) (RVQoE) report.

2. The method of claim 1, wherein the first information comprises at least one of:
RVQoE report configuration information, configured to indicate a network node to which the UE reports the RVQoE report;
first indication information, configured to indicate the UE to report a data radio bearer (DRB) identity (ID) of at least one DRB corresponding to the RVQoE report; or
second indication information, configured to indicate the UE to report first bearer-related information corresponding to the RVQoE report.

3. The method of claim 2, wherein the first bearer-related information comprises at least one of:
at least one protocol data unit (PDU) session ID;
at least one quality of service (QoS) flow ID (QFI); or
at least one DRB ID.

4. The method of claim 2, wherein the second indication information is configured to indicate the UE to report, upon occurrence of a specific event, the first bearer-related information, and the specific event comprises at least one of:
an application layer session start event; or
an event where a bearer corresponding to an application layer measurement changes.

5. The method of any one of claims 2-4, further comprising:
receiving second information sent by a second node, wherein the second information is configured to indicate reporting of second bearer-related information corresponding to the RVQoE report.

6. The method of claim 5, wherein the second bearer-related information comprises at least one of:
a DRB ID corresponding to an RVQoE measurement;
the first bearer-related information; or
bearer mapping information, wherein the bearer mapping information is configured to indicate a mapping relationship between a DRB ID and a PDU session ID and/or a QFI.

7. The method of claim 6, further comprising:
determining the RVQoE report configuration information according to the second information.

8. The method of any one of claims 2-4, wherein the method comprises one of:
receiving third information sent by the UE, wherein the third information is determined by the UE based on the first bearer-related information; or
receiving third information sent by the UE, wherein the third information is sent by the UE according to a protocol agreement.

9. The method of claim 8, further comprising:
determining the RVQoE report configuration information according to the third information.

10. The method of claim 8, wherein the third information is sent via being comprised in a message configured to send a status indication of an application layer whose session starts, and/or the third information is sent in a case where a bearer corresponding to an application layer measurement changes.

11. The method of any one of claims 2-4, further comprising:
receiving fourth information sent by the UE;
wherein the method further comprises:
determining, according to the fourth information, whether to send the RVQoE report to a second node;
and/or
determining, according to the fourth information, whether to read the RVQoE report.

12. The method of claim 11, wherein determining, according to the fourth information, whether to send the RVQoE report to the second node, comprises:
determining, according to the fourth information and second bearer-related information, whether to send the RVQoE report to the second node.

13. The method of claim 11, wherein the fourth information comprises: third indication information, and the third indication information is configured to indicate whether to send the RVQoE report to the second node; and
wherein determining, according to the fourth information, whether to send the RVQoE report to the second node, comprises:
determining, according to the third indication information, whether to send the RVQoE report to the second node.

14. The method of claim 11, wherein the fourth information further comprises third bearer-related information corresponding to the RVQoE report, and the third bearer-related information is configured for the first node or the second node to perform a resource optimization operation.

15. The method of claim 14, wherein the third bearer-related information comprises at least one of:
at least one DRB ID;
at least one list ID, wherein one list ID comprises at least one DRB ID;
first timestamp information corresponding to the DRB ID; or
second timestamp information corresponding to the list ID.

16. The method of any one of claims 2-4, further comprising:
determining, according to second bearer-related information, whether to send the RVQoE report to a second node.

17. The method of claim 5, wherein
the first node is a master node (MN), and the second node is a secondary node (SN);
or
the first node is an SN, and the second node is an MN.

18. A measurement report processing method, performed by a user equipment (UE), comprising:
receiving first information sent by a first node, wherein the first information is configured to indicate the UE to report, in a case where the UE is in multi-connection, a radio access network (RAN) visible quality of experience (QoE) (RVQoE) report.

19. The method of claim 18, wherein the first information comprises at least one of:
RVQoE report configuration information, configured to indicate a network node to which the UE reports the RVQoE report;
first indication information, configured to indicate the UE to report a data radio bearer (DRB) identity (ID) of at least one DRB corresponding to the RVQoE report; or
second indication information, configured to indicate the UE to report first bearer-related information corresponding to the RVQoE report.

20. The method of claim 19, wherein the first bearer-related information comprises at least one of:
at least one protocol data unit (PDU) session ID;
at least one quality of service (QoS) flow ID (QFI); or
at least one DRB ID.

21. The method of claim 19, wherein the second indication information is configured to indicate the UE to report, upon occurrence of a specific event, the first bearer-related information, and the specific event comprises at least one of:
an application layer session start event; or
an event where a bearer corresponding to an application layer measurement changes.

22. The method of any one of claims 19-21, further comprising:
determining third information based on the first bearer-related information; and
sending the third information to the first node, wherein the third information is configured for the first node to determine the RVQoE report configuration information.

23. The method of any one of claims 19-21, further comprising:
sending fourth information to the first node comprising the RVQoE report, wherein the fourth information is configured for the first node to determine whether to read the RVQoE report and/or whether to send the RVQoE report to a second node.

24. The method of claim 23, wherein the fourth information and second bearer-related information are configured for the first node to determine whether to send the RVQoE report to the second node.

25. The method of claim 23, wherein the fourth information comprises third indication information, and the third indication information is configured to indicate whether the first node sends the RVQoE report to the second node.

26. The method of claim 23, wherein the fourth information further comprises third bearer-related information corresponding to the RVQoE report, and the third bearer-related information is configured for the first node or the second node to perform a resource optimization operation.

27. The method of claim 26, wherein the third bearer-related information comprises at least one of:
at least one DRB ID;
at least one list ID, wherein one list ID comprises at least one DRB ID;
first timestamp information corresponding to the DRB ID; or
second timestamp information corresponding to the list ID.

28. The method of claim 26, wherein the third bearer-related information further comprises bearer information, and the method comprises:
adding the bearer information to the fourth information based on an access stratum (AS) of the UE;
and/or
obtaining the bearer information from an AS of the UE based on an application layer of the UE, and adding the bearer information to the fourth information based on the application layer of the UE.

29. The method of claim 23, wherein
the first node is a master node (MN), and the second node is a secondary node (SN);
or
the first node is an SN, and the second node is an MN.

30. A measurement report processing method, performed by a second node, comprising:
receiving a radio access network (RAN) visible quality of experience (QoE) (RVQoE) report sent by a first node, wherein the RVQoE report is sent by the first node in a case of determining that the RVQoE report needs to be sent to the second node.

31. The method of claim 30, wherein the RVQoE report is sent by a user equipment (UE) in a case of receiving first information sent by the first node, and the first information is configured to indicate the UE to report, in a case where the UE is in multi-connection, the RVQoE report.

32. The method of claim 31, wherein the first information comprises at least one of:
RVQoE report configuration information, configured to indicate a network node to which the UE reports the RVQoE report;
first indication information, configured to indicate the UE to report a data radio bearer (DRB) identity (ID) of at least one DRB corresponding to the RVQoE report; or
second indication information, configured to indicate the UE to report first bearer-related information corresponding to the RVQoE report.

33. The method of claim 32, further comprising:
sending second information to the first node, wherein the second information is configured to indicate reporting of second bearer-related information corresponding to the RVQoE report, and the second information is configured for the first node to determine the RVQoE report configuration information.

34. The method of claim 33, wherein the second bearer-related information comprises at least one of:
a DRB ID corresponding to an RVQoE measurement;
the first bearer-related information; or
bearer mapping information, wherein the bearer mapping information is configured to indicate a mapping relationship between a DRB ID and a protocol data unit (PDU) session ID and/or a quality of service (QoS) flow ID (QFI).

35. The method of claim 30, wherein
the first node is a master node (MN), and the second node is a secondary node (SN);
or
the first node is an SN, and the second node is an MN.

36. A measurement report processing apparatus, comprising:
a first sending module, configured to send first information to a user equipment (UE), wherein the first information is configured to indicate the UE to report, in a case where the UE is in multi-connection, a radio access network (RAN) visible quality of experience (QoE) (RVQoE) report.

37. A measurement report processing apparatus, comprising:
a second receiving module, configured to receive first information sent by a first node, wherein the first information is configured to indicate the UE to report, in a case where the UE is in multi-connection, a radio access network (RAN) visible quality of experience (QoE) (RVQoE) report.

38. A measurement report processing apparatus, comprising:
a third receiving module, configured to receive a radio access network (RAN) visible quality of experience (QoE) (RVQoE) report sent by a first node, wherein the RVQoE report is sent by the first node after the first node determines that the RVQoE report needs to be sent to a second node.

39. A communication device, comprising:
a processor; and
a memory for storing instructions executable by the processor;
wherein the processor is configured to perform, when executing the executable instructions, the measurement report processing method according to any one of claims 1-17, any one of claims 18-29, or any one of claims 30-35.

40. A computer storage medium storing a computer executable program, wherein when the computer executable program is executed by a processor, the processor is caused to perform the measurement report processing method according to any one of claims 1-17, any one of claims 18-29, or any one of claims 30-35.
